# EUROPEAN PATENT APPLICATION

(11) **EP 3 334 007 A1**
(43) Date of publication of application: **13.06.2018**
(21) Application number: 16834803.5
(22) Date of filing: 29.07.2016
(51) Int. Cl.: H02J 13/00, H02J 3/32, H02J 3/38

(54) **POWER STORAGE CONTROL SYSTEM, POWER STORAGE SYSTEM, POWER STORAGE CONTROL DEVICE, CHARGE/DISCHARGE CONTROL DEVICE, AND POWER STORAGE DEVICE**

(30) Priority: 07.08.2015 JP 2015157757
(71) Applicant: Panasonic Intellectual Property Management Co., Ltd., Osaka-shi, Osaka 540-6207 (JP)
(72) Inventor: ONODA, Sen'ichi, Osaka-shi, Osaka 540-6207 (JP); YOSHIMATSU, Takahiro, Osaka-shi, Osaka 540-6207, (JP)
(74) Representative: Appelt, Christian W.
(86) International application number: PCT/JP2016/003515
(87) International publication number: WO 2017/026100

(57) **Abstract**

An object of the present invention is to provide an electrical energy storage control system capable of controlling charge discharge of a storage battery even during communication malfunction. An electrical energy storage control system (100) according to the invention includes a communicator (21) (first communicator), a second creation unit 32 (creation unit) and an electrical energy storage controller (22). The communicator (21) is configured to communicate with a communicator (13) (second communicator) of an electrical energy storage (1). The second creation unit 32 is configured to create an auxiliary control instruction representing operation instruction content to the electrical energy storage (1) in response to occurrence of communication malfunction between the communicator (21) and the communicator (13). The electrical energy storage controller (22) is configured to provide the electrical energy storage (1) via the communicator (21) with a main control instruction representing operation instruction content to the electrical energy storage (1) and the auxiliary control instruction.

## Description

### Technical Field

The invention relates generally to an electrical energy storage control system, an electrical energy storage system, an electrical energy storage control device, a charge discharge control device and an electrical energy storage.

### Background Art

A managing system as an electrical energy storage control system equipped with an electrical energy storage having a storage battery configured to store electric power and a controller as an electrical energy storage control device configured to communicate with the electrical energy storage is known conventionally (see for example, Patent Document 1). Patent Document 1 discloses a configuration in which the controller provides the electrical energy storage with an instruction as an operating mode of the storage battery.

Communication malfunction occurring between the electrical energy storage control device and the electrical energy storage may cause disabling charge discharge control of the storage battery as a result of transmission failure of the instruction to the electrical energy storage.

### Citation List

### Patent Literature

Patent Document 1: JP 2014-33591 A

### Summary of Invention

The present invention has been achieved in view of the above circumstances, and an object thereof is to provide an electrical energy storage control system, an electrical energy storage system, an electrical energy storage control device, a charge discharge control device and an electrical energy storage, capable of controlling charge discharge of a storage battery even during communication malfunction.

A electrical energy storage control system in accordance with an aspect of the present invention is configured to control an electrical energy storage, and includes a first communicator, a creation unit and an electrical energy storage controller. The electrical energy storage has a storage battery and is allowed to be installed in a customer facility. The first communicator is configured to communicate with a second communicator of the electrical energy storage. The creation unit is configured to create an auxiliary control instruction representing operation instruction content to the electrical energy storage in response to occurrence of communication malfunction between the first communicator and the second communicator. The electrical energy storage controller is configured to provide the electrical energy storage via the first communicator with a main control instruction representing operation instruction content to the electrical energy storage and the auxiliary control instruction.

An electrical energy storage system in accordance with an aspect of the present invention includes the electrical energy storage control system, and the electrical energy storage. The electrical energy storage includes the storage battery, the second communicator, a charge discharge controller and a determination unit. The second communicator is configured to communicate with the first communicator. The charge discharge controller is configured to perform charge discharge control of the storage battery. The determination unit is configured to determine whether communication between the first communicator and the second communicator is normal or communication malfunction occurs therebetween. The second communicator is configured to receive the main control instruction and the auxiliary control instruction from the electrical energy storage controller during normal communication between the first communicator and the second communicator. The charge discharge controller is configured to perform charge discharge control of the storage battery based on the main control instruction in response to a determination result by the determination unit representing the normal communication between the first communicator and the second communicator. The charge discharge controller is configured to, in response to a determination result by the determination unit representing the communication malfunction between the first communicator and the second communicator, perform charge discharge control of the storage battery based on the auxiliary control instruction received during the normal communication between the first communicator and the second communicator.

An electrical energy storage control device in accordance with an aspect of the present invention is configured to control an electrical energy storage and includes a first communicator and an electrical energy storage controller. The electrical energy storage has a storage battery and is allowed to be installed in a customer facility. The first communicator is configured to communicate with a second communicator of the electrical energy storage. The electrical energy storage controller is configured to provide the electrical energy storage via the first communicator with a main control instruction representing operation instruction content to the electrical energy storage and an auxiliary control instruction representing operation instruction content to the electrical energy storage in response to occurrence of communication malfunction between the first communicator and the second communicator.

A charge discharge control device in accordance with an aspect of the present invention is configured to perform charge discharge control of a storage battery allowed to be installed in a customer facility, and includes a second communicator, a charge discharge controller and a determination unit. The second communicator is configured to communicate with a first communicator of an electrical energy storage control device. The charge discharge controller is configured to perform charge discharge control of the storage battery. The determination unit is configured to determine whether communication between the first communicator and the second communicator is normal or communication malfunction occurs therebetween. The second communicator is configured to receive, from the electrical energy storage control device during normal communication between the first communicator and the second communicator, a main control instruction representing operation instruction content of the charge discharge control device, and an auxiliary control instruction representing operation instruction content of the charge discharge control device during occurrence of communication malfunction between the first communicator and the second communicator. The charge discharge controller is configured to perform charge discharge control of the storage battery based on the main control instruction in response to a determination result by the determination unit representing the normal communication between the first communicator and the second communicator. The charge discharge controller is configured to, in response to a determination result by the determination unit representing the communication malfunction between the first communicator and the second communicator, perform charge discharge control of the storage battery based on the auxiliary control instruction received during the normal communication between the first communicator and the second communicator.

An electrical energy storage in accordance with an aspect of the present invention includes the storage battery allowed to be installed in the customer facility and the charge discharge control device.

### Brief Description of Drawings

Figure 1 is a block diagram showing an overall configuration including an electrical energy storage control system, in accordance with an embodiment of the present invention; and
Figure 2 is a block diagram showing an overall configuration including a modified example of the electrical energy storage control system in accordance with the embodiment of the present invention.

### Description of Embodiments

An embodiment of the present invention will hereinafter be explained with reference to the drawings.

### (Embodiment)

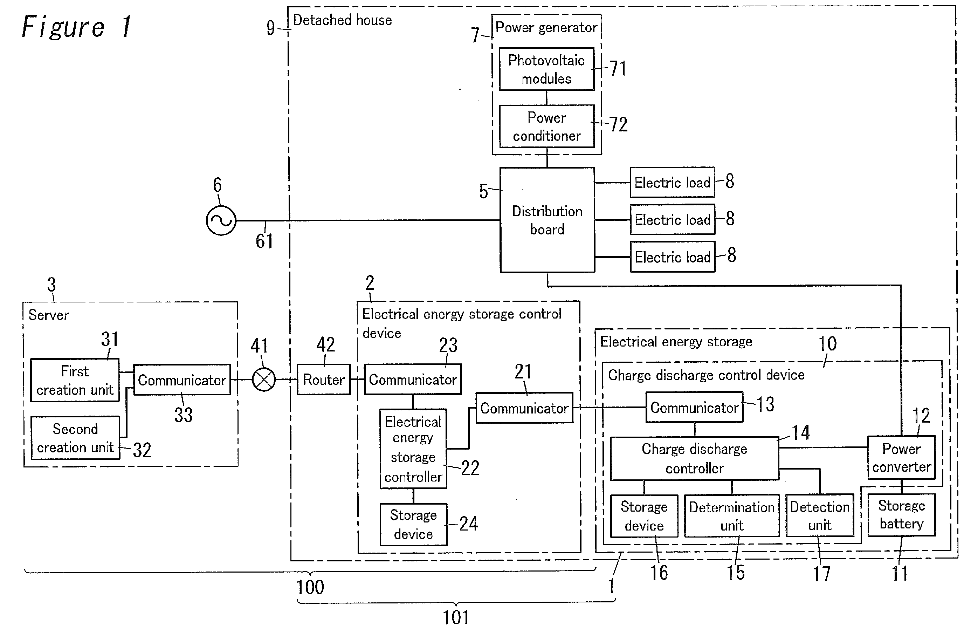

Figure 1 shows a block diagram of an electrical energy storage control system 100 according to the present embodiment. First, a schema of the electrical energy storage control system 100 according to the embodiment will be explained.

The electrical energy storage control system 100 according to the embodiment is a system configured to control an electrical energy storage 1. The electrical energy storage 1 has a storage battery 11 and is allowed to be installed in a customer facility. The electrical energy storage control system 100 includes a communicator 21 as a first communicator, a second creation unit 32 as a creation unit, and an electrical energy storage controller 22. The communicator 21 is configured to communicate with a communicator 13 as a second communicator of the electrical energy storage 1. The second creation unit 32 is configured to create an auxiliary control instruction representing operation instruction content to the electrical energy storage 1 in response to occurrence of communication malfunction between the communicator 21 and the communicator 13. The electrical energy storage controller 22 is configured to provide the electrical energy storage 1 via the communicator 21 with a main control instruction representing operation instruction content to the electrical energy storage 1 and the auxiliary control instruction.

With the above configuration, the electrical energy storage control system 100 according to the present embodiment creates an auxiliary control instruction provided for communication malfunction to be provided to the electrical energy storage 1, thereby being capable of controlling charge discharge of the storage battery 11 even during the communication malfunction.

Each of the electrical energy storage control system 100, an electrical energy storage system 101, an electrical energy storage control device 2 and the electrical energy storage 1, in accordance with the present embodiment will hereinafter be explained in detail.

The electrical energy storage control system 100 according to the present embodiment includes a server 3 and the electrical energy storage control device 2. The electrical energy storage system 101 includes the electrical energy storage 1, and the electrical energy storage control system 100-the server 3 and the electrical energy storage control device 2. Note that in the embodiment a detached house 9 is exemplified as the customer facility but the customer facility may be an apartment block, an office block or the like.

A commercial power supply 6, the electrical energy storage 1 and a power generator 7 are provided for the detached house 9 as power supplies for providing electric power to a plurality of electric loads 8-three ones in Figure 1 such as, for example, luminaires, air conditioners and a refrigerator(s). The commercial power supply 6 is to supply AC power as commercial power to a distribution board 5 provided in the detached house 9 via an electric power system 61. The power generator 7 is, for example a photovoltaic power generator and includes photovoltaic modules 71 and a power conditioner 72. The photovoltaic modules 71 are allowed to be provided on a housetop or the like of the detached house 9 and configured to receive sunlight to generate electric power. The power conditioner 72 is configured to convert DC power generated with the photovoltaic modules 71 into AC power to be supplied to the distribution board 5. Note that the power generator 7 is not limited to the photovoltaic power generator, but may be, for example a fuel cell power generator including a fuel cell(s). In addition, both the photovoltaic power generator and the fuel cell power generator may be employed as the power generator 7. The electrical energy storage 1 also includes the storage battery 11 configured to operate under charge and discharge (charge discharge) control and a charge discharge control device 10 configured to perform the charge discharge control of the storage battery 11. The charge discharge control device 10 includes a power converter 12 configured to convert DC power from the storage battery 11 into AC power to be supplied to the distribution board 5. A main breaker, branch breakers and the like are built in the distribution board 5. The electrical loads 8 are to be supplied with AC power via branch circuits connected to the branch breakers. The power converter 12 is allowed to convert DC power generated with the photovoltaic modules 71 into AC power to be reverse flowed to the electric power system 61, thereby selling electricity. The power converter 12 is configured to convert AC power supplied from the distribution board 5 into DC power to charge the storage battery 11.

The electrical energy storage control device 2 installed in the detached house 9 is configured to control charge or discharge operation of the storage battery 11 performed by the charge discharge control device 10 provided in the electrical energy storage 1. The electrical energy storage control device 2, and the charge discharge control device 10 of the electrical energy storage 1 include the communicator 21 and the communicator 13 as communication interfaces, respectively. The communicator 21 and the communicator 13 are electrically connected with each other via a connection cable and will perform communication according to communications protocol such as Modbus (registered trademark) or EIA-485 (RS-485). The electrical energy storage control device 2 includes the electrical energy storage controller 22 configured to provide the electrical energy storage 1 with a control instruction. The electrical energy storage controller 22 may provide a control instruction to the charge discharge control device 10 of the electrical energy storage 1 via the communicator 21. The charge discharge control device 10 includes a charge discharge controller 14 configured to control charge discharge of the storage battery 11 by controlling the power converter 12. The charge discharge controller 14 may perform operation such as charge, discharge, or stand-by as neither charge nor discharge, of the storage battery 11 by controlling the power converter 12 based on the control instruction received via the communicator 13. The electrical energy storage controller 22 may provide the electrical energy storage 1 with a control instruction based on a request for power adjustment from electricity utility. Hereinafter, the request for power adjustment is called a demand response (DR).

In recent years, electricity utility or the like has made a proposal for demand response service in order to adjust the supply and demand of electric power. As one of such demand response techniques, a request (DR request) is provided from the electricity utility to each of customers. When commercial power supply is expected to be tight by future commercial power demand, customers are previously requested to reduce the consumption of commercial power for a power suppression period. The DR request in the embodiment contains a request for an operation mode of the electrical energy storage 1 for a target period. For example, a request for discharge of the storage battery 11 for time-of-day in which the power supply is expected to be tight by the power demand enables the suppression of the consumption of commercial power. The server 3 of the electricity utility is configured to create the DR request. The server 3 includes a first creation unit 31 configured to create the DR request, and the second creation unit 32. The first creation unit 31 and the second creation unit 32 are to create the main control instruction representing operation instruction content of the electrical energy storage 1 and the DR request containing the auxiliary control instruction, respectively. Specific description will be provided with reference to examples of the DR request shown in Table 1.

**(Table)**

| Start time | End time | Main control instruction | Auxiliary control instruction |
|---|---|---|---|
| 0:00 | 5:00 | Charge | Stand-by |
| 5:00 | 7:00 | Stand-by | Stand-by |
| 7:00 | 9:00 | Discharge | Stand-by |
| 9:00 | 17:00 | Eco-function | Eco-function |
| 17:00 | 24:00 | Discharge | Stand-by |

Note that each time-of-day, each main control instruction and each auxiliary control instruction in Table 1 are merely examples, and the present embodiment is not limited thereto.

The first creation unit 31 is configured to create a main control instruction representing operation instruction content of the electrical energy storage 1 during normal communication between the electrical energy storage control device 2 and the electrical energy storage 1. The second creation unit 32 is configured to create an auxiliary control instruction representing operation instruction content of the electrical energy storage 1 during communication malfunction between the electrical energy storage control device 2 and the electrical energy storage 1. That is, the second creation unit 32 is provided for the communication malfunction between the electrical energy storage control device 2 and the electrical energy storage 1 and is to create an auxiliary control instruction for communication malfunction. The first creation unit 31 may create, during a previous day of a target day by the DR request, main control instructions for each time-of-day of 24 hours in the next day-the target day by the DR request. The second creation unit 32 may create, during the previous day of the target day by the DR request, auxiliary control instructions for each time-of-day of 24 hours in the next day-the target day by the DR request.

Each operation instruction content represented by the main control instruction and the auxiliary control instruction is an operation mode of the electrical energy storage 1. In table 1, "Charge" represents an instruction-a request for forcing the electrical energy storage 1 to operate in a mode that causes the storage battery 11 to charge, while "Discharge" represents an instruction-a request for forcing the electrical energy storage 1 to operate in a mode that causes the storage battery 11 to discharge. In Table 1, "Stand-by" represents an instruction-a request for forcing the electrical energy storage 1 to operate in a mode that causes the storage battery 11 to neither charge nor discharge. In Table 1, "Eco-function" represents an instruction-a request for forcing the electrical energy storage 1 to operate in an automatic mode. When operating in the automatic mode, the electrical energy storage 1 may, for example, cause the storage battery 11 to charge by electric power generated with the photovoltaic modules 71 and to discharge in response to power consumption by the electric loads 8 so that an electricity bill is reduced.

The server 3 is configured to provide the electrical energy storage control device 2 with, by a demand response signal (hereinafter called DR signal), a DR request-the main control instruction and the auxiliary control instruction created by the first creation unit 31 and the second creation unit 32. The server 3 includes a communicator 33 as a communication interface and is connected to a telecommunications network 41 such as e.g., the Internet. The electrical energy storage control device 2 includes a communicator 23 as a communication network and is connected to the telecommunications network 41 via a router 42. The electrical energy storage control device 2 may receive a DR signal from the server 3 via the router 42 and the telecommunications network 41 according to a telecommunications standard such as, for example, Hyper Transfer protocol Secure (HTTPS) or Ethernet (trademark).

The electrical energy storage control device 2 is configured to provide the electrical energy storage 1 with a control instruction based on the DR request contained in the DR signal received. Specifically, the electrical energy storage control device 2 further includes a storage device 24 configured to store the DR request contained in the DR signal received from the server 3. The electrical energy storage controller 22 will reference the DR request stored in the storage device 24 and extract a main control instruction and an auxiliary control instruction corresponding to the current time to provide the charge discharge control device 10 of the electrical energy storage 1 via the communicator 21 with the main control instruction and the auxiliary control instruction extracted. The electrical energy storage controller 22 may provide the electrical energy storage 1 with the main control instruction and the auxiliary control instruction at predetermined intervals-e.g., every one minute.

The charge discharge control device 10 provided in the electrical energy storage 1 is configured to control charge discharge of the storage battery 11 based on the main control instruction and the auxiliary control instruction from the electrical energy storage control device 2. Specifically, the charge discharge control device 10 further includes a determination unit 15 and a storage device 16. The determination unit 15 is configured to determine whether communication between the communicator 21 and the communicator 13 is normal or communication malfunction occurs therebetween. The determination unit 15 may make determination representing normal communication between the communicator 21 and the communicator 13 responsive to receipt of the main control instruction and the auxiliary control instruction by the communicator 13 within a predetermined time period-e.g., five minutes. The determination unit 15 may also make determination representing communication malfunction between the communicator 21 and the communicator 13 when failing to receive the main control instruction and the auxiliary control instruction to be received by the communicator 13 within the predetermined time period-e.g., five minutes. The storage device 16 is configured to store the auxiliary control instruction received from the electrical energy storage control device 2. Whenever the communicator 13 receives an auxiliary control instruction, the auxiliary control instruction stored in the storage device 16 is renewed and replaced therewith as a newest auxiliary control instruction.

The charge discharge controller 14 is configured to control the power converter 12 so that it operates in the operation mode represented by the newest main control instruction received with the communicator 13 in response to a determination result by the determination unit 15 representing the normal communication between the communicator 21 and the communicator 13. This configuration enables the electrical energy storage 1 to perform charge discharge control of the storage battery 11 according to the DR request and to suppress the consumption of commercial power for time-of-day in which the power supply is expected to be tight by the power demand.

The charge discharge controller 14 is configured to control the power converter 12 so that it operates in the operation mode represented by the auxiliary control instruction stored in the storage device 16 in response to a determination result by the determination unit 15 representing communication malfunction between the communicator 21 and the communicator 13. That is, when failing to receive a main control instruction from the electrical energy storage control device 2, the electrical energy storage 1 will perform charge discharge control of the storage battery 11 based on the auxiliary control instruction representing operation instruction content for communication malfunction, received during normal communication and stored in the storage device 16. This configuration enables the predetermined charge discharge control of the storage battery 11 even during occurrence of communication malfunction between the electrical energy storage 1 and the electrical energy storage control device 2.

Note that the charge discharge controller 14 may continue the charge discharge control of the storage battery 11 based on the newest main control instruction from a communication interruption between the communicator 21 and the communicator 13 to the determination by the determination unit 15 representing communication malfunction between the communicator 21 and the communicator 13.

In addition, the auxiliary control instruction is an instruction provided when the charge discharge control device 10 fails to receive the main control instruction, and therefore the operation instruction content is preferably "Stand-by" or "Eco-function".

As stated above, the electrical energy storage control system 100 according to the embodiment is provided for communication malfunction between the electrical energy storage control device 2 and the electrical energy storage 1, and configured to create an auxiliary control instruction for communication malfunction representing operation instruction content of the electrical energy storage 1 to be transmitted to the electrical energy storage 1. The electrical energy storage 1 will perform charge discharge control of the storage battery 11 based on the auxiliary control instruction in response to occurrence of communication malfunction between the electrical energy storage control device 2 and the electrical energy storage 1. The embodiment therefore enables the electrical energy storage control system 100 to control charge discharge of the storage battery 11 even during the communication malfunction between the electrical energy storage control device 2 and the electrical energy storage 1.

The electrical energy storage system 101 according to the embodiment is a system including the electrical energy storage control system 100 and the electrical energy storage 1. The electrical energy storage control system 100 is a system configured to control the electrical energy storage 1. The electrical energy storage 1 has the storage battery 11 and is allowed to be installed in the customer facility. The electrical energy storage control system 100 includes the communicator 21 as the first communicator, the second creation unit 32 as the creation unit, and the electrical energy storage controller 22. The communicator 21 is configured to communicate with the communicator 13 as the second communicator of the electrical energy storage 1. The second creation unit 32 is configured to create an auxiliary control instruction representing operation instruction content to the electrical energy storage 1 in response to occurrence of communication malfunction between the communicator 21 and the communicator 13. The electrical energy storage controller 22 is configured to provide the electrical energy storage 1 via the communicator 21 with a main control instruction representing operation instruction content to the electrical energy storage 1 and the auxiliary control instruction. The electrical energy storage 1 includes the storage battery 11, the communicator 13 as the second communicator, the charge discharge controller 14, and the determination unit 15. The communicator 13 is configured to communicate with the communicator 21 as the first communicator. The charge discharge controller 14 is configured to control charge discharge of the storage battery 11. The determination unit 15 is configured to determine whether communication between the communicator 21 and the communicator 13 is normal or communication malfunction occurs therebetween. The communicator 13 is configured to receive, from the electrical energy storage controller 22 during normal communication between the communicator 21 and the communicator 13, a main control instruction and an auxiliary control instruction. The charge discharge controller 14 is configured to control charge discharge of the storage battery 11 based on the main control instruction in response to a determination result by the determination unit 15 representing the normal communication between the communicator 21 and the communicator 13. The charge discharge controller 14 is also configured to, in response to a determination result by the determination unit 15 representing communication malfunction between the communicator 21 and the communicator 13, control charge discharge of the storage battery 11 based on the auxiliary control instruction received during the normal communication between the communicator 21 and the communicator 13.

The above configuration of the embodiment enables the electrical energy storage system 101 to control charge discharge of the storage battery 11 even during the communication malfunction between the electrical energy storage control device 2 and the electrical energy storage 1.

The electrical energy storage control device 2 according to the embodiment is a device configured to control the electrical energy storage 1. The electrical energy storage 1 has the storage battery 11 and is allowed to be installed in the detached house 9 as the customer facility. The electrical energy storage control device 2 includes the communicator 21 as the first communicator, and the electrical energy storage controller 22. The communicator 21 is configured to communicate with the communicator 13 as the second communicator of the electrical energy storage 1. The electrical energy storage controller 22 is configured to provide the electrical energy storage 1 via the communicator 21 with a main control instruction representing operation instruction content to the electrical energy storage 1, and an auxiliary control instruction representing operation instruction content to the electrical energy storage 1 during occurrence of communication malfunction between the communicator 21 and the communicator 13.

The above configuration enables the electrical energy storage control device 2 to control charge discharge of the storage battery 11 even during communication malfunction between the electrical energy storage control device 2 and the electrical energy storage 1.

The charge discharge control device 10 according to the embodiment is a device configured to control charge discharge (charge and discharge) of the storage battery 11 that is allowed to be installed in the detached house 9 as the customer facility. The charge discharge control device 10 includes the communicator 13 as the second communicator, the charge discharge controller 14, and the determination unit 15. The communicator 13 is configured to communicate with the communicator 21 as the first communicator of the electrical energy storage control device 2. The charge discharge controller 14 is configured to control charge discharge of the storage battery 11. The determination unit 15 is configured to determine whether communication between the communicator 21 and the communicator 13 is normal or communication malfunction occurs therebetween. The communicator 13 is configured to receive, from the electrical energy storage control device 2 during normal communication between the communicator 21 and the communicator 13, a main control instruction representing operation content of the charge discharge control device 10, and an auxiliary control instruction representing operation instruction content of the charge discharge control device 10 during occurrence of communication malfunction between the communicator 21 and the communicator 13. The charge discharge controller 14 is configured to control charge discharge of the storage battery 11 based on the main control instruction in response to a determination result by the determination unit 15 representing the normal communication between the communicator 21 and the communicator 13. The charge discharge controller 14 is also configured to, in response to a determination result by the determination unit 15 representing the communication malfunction between the communicator 21 and the communicator 13, control charge discharge of the storage battery 11 based on the auxiliary control instruction received during the normal communication between the communicator 21 and the communicator 13.

The above configuration enables the charge discharge control device 10 to control charge discharge of the storage battery 11 even during the communication malfunction between the electrical energy storage control device 2 and the electrical energy storage 1-the charge discharge control device 10.

The operation instruction content represented by the auxiliary control instruction is an operation mode of the electrical energy storage 1, containing charge of the storage battery 11 and discharge of the storage battery 11. The electrical energy storage 1 is provided with the instruction of the operation mode, thereby facilitating processing when it performs charge discharge control of the storage battery 11 based on the auxiliary control instruction.

The charge discharge controller 14 is configured to, when a determination result by the determination unit 15 represents a change from a malfunction state to a normal state of the communication between the communicator 21 and the communicator 13, perform charge discharge control of the storage battery 11 based on the main control instruction received with the communicator 13. This configuration enables the charge discharge controller 14 to perform charge discharge control of the storage battery 11 according to the DR request when the communication state between the electrical energy storage control device 2 and the electrical energy storage 1 recovers from the malfunction state to change to the normal state. It is therefore possible to suppress the consumption of commercial power for time-of-day in which power supply is expected to be tight by power demand.

The charge discharge controller 14 may operate in an operation mode different from the operation modes represented by the main control instruction and the auxiliary control instruction. Specifically, the electrical energy storage 1 includes a detection unit 17 configured to detect remaining capacity of the storage battery 11 to provide a detection result to the charge discharge controller 14. The detection unit 17 is configured to detect the remaining capacity of the storage battery 11 to provide a detection result to the charge discharge controller 14. The charge discharge controller 14 is configured to control charge discharge of the storage battery 11 based on the remaining capacity of the storage battery 11 and the main control instruction or the auxiliary control instruction. For example, when the remaining capacity of the storage battery 11 is less than or equal to a threshold, the charge discharge controller 14 may control the power converter 12 to cause the storage battery 11 to charge in order to prevent over discharge of the storage battery 11 even if an operation mode represented by the main control instruction or the auxiliary control instruction is "discharge". Thus, the charge controller controls charge discharge of the storage battery 11 based on the remaining capacity of the storage battery 11 and the main control instruction or the auxiliary control instruction, thereby making it possible to suppress degradation of the storage battery 11 due to over discharge and the like.

The electrical energy storage 1 according to the embodiment includes the storage battery 11 allowed to be installed in the detached house 9 as the customer facility, and the charge discharge control device 10. The charge discharge control device 10 is a device configured to control charge discharge (charge and discharge) of the storage battery 11 allowed to be installed in the detached house 9 as the customer facility. The charge discharge control device 10 includes the communicator 13 as the second communicator, the charge discharge controller 14, and the determination unit 15. The communicator 13 is configured to communicate with the communicator 21 as the first communicator of the electrical energy storage control device 2. The charge discharge controller 14 is configured to control charge discharge of the storage battery 11. The determination unit 15 is configured to determine whether communication between the communicator 21 and the communicator 13 is normal or communication malfunction occurs therebetween. The communicator 13 is configured to receive, from the electrical energy storage control device 2 during normal communication between the communicator 21 and the communicator 13, a main control instruction representing operation content of the charge discharge control device 10, and an auxiliary control instruction representing operation instruction content of the charge discharge control device 10 during occurrence of communication malfunction between the communicator 21 and the communicator 13. The charge discharge controller 14 is configured to control charge discharge of the storage battery 11 based on the main control instruction in response to a determination result by the determination unit 15 representing the normal communication between the communicator 21 and the communicator 13. The charge discharge controller 14 is also configured to, in response to a determination result by the determination unit 15 representing the communication malfunction between the communicator 21 and the communicator 13, control charge discharge of the storage battery 11 based on the auxiliary control instruction received during the normal communication between the communicator 21 and the communicator 13.

The above configuration enables the electrical energy storage 1 to control charge discharge of the storage battery 11 even during the communication malfunction between the electrical energy storage control device 2 and the electrical energy storage 1.

Note that in the embodiment the first creation unit 31 and the second creation unit 32 create one main control instruction and one auxiliary control instruction a day, but may create two or more each a day, thereby transmitting two or more DR signals a day.

The determination unit 15 is configured to determine presence of communication malfunction between the communicator 21 and the communicator 13 when the communicator 13 fails to receive the main control instruction and the auxiliary control instruction within the predetermined time period (e.g., five minutes), but the embodiment is not limited to the determination method. The electrical energy storage control device 2 may vary or renew a determination method or a criterion for presence or non-presence of the communication malfunction by the determination unit 15.

Note that the electrical energy storage 1 according to the embodiment has a configuration including the charge discharge control device 10, but the charge discharge control device 10 may be provided separately from the electrical energy storage 1. The electrical energy storage control device 2 and the electrical energy storage 1 may be housed in the same enclosure to be integrally configured. That is, the electrical energy storage control device 2, the electrical energy storage 1 and the charge discharge control device 10 may be integrally or separately configured.

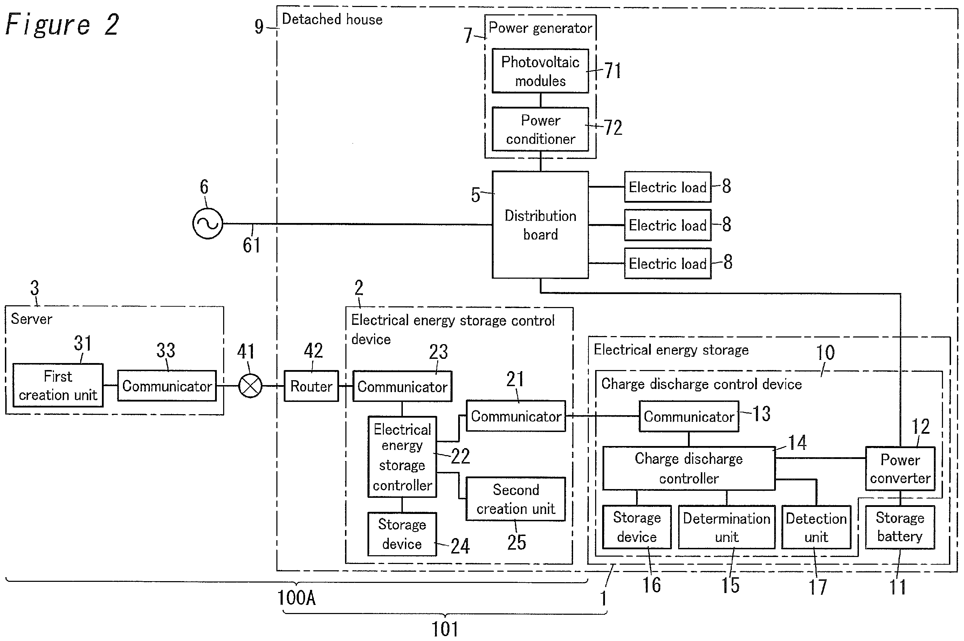

Figure 2 shows a modified example of the electrical energy storage control system 100. In an electrical energy storage control system 100A according to the modified example, not a server 3 but an electrical energy storage control device 2 includes a second creation unit 25 configured to create an auxiliary control instruction. Even the electrical energy storage control system 100A in the modified example is able to control charge discharge of a storage battery 11 even during communication malfunction between the electrical energy storage control device 2 and an electrical energy storage 1. In addition, the electrical energy storage control device 2 allowed to be installed in a detached house 9 includes the second creation unit 25, thereby enabling a user of the electrical energy storage 1 to easily set instruction content of the auxiliary control instruction provided for communication malfunction.

Note that the abovementioned embodiment and modified example are merely examples. Therefore, the present invention is not limited to the embodiment and modified example, but various modifications may be made according to design and the like despite the embodiment as long as they fall within the true scope of technical ideas according to the present invention.

### Reference Signs List

- 100, 100A: Electrical energy storage control system
- 101: Electrical energy storage system
- 1: Electrical energy storage
- 10: Charge discharge control device
- 11: Storage battery
- 13: Communicator (Second communicator)
- 14: Charge discharge controller
- 15: Determination unit
- 2: Electrical energy storage control device
- 21: Communicator (First communicator)
- 22: Electrical energy storage controller
- 25: Second creation unit (Creation unit)
- 32: Second creation unit (Creation unit)
- 9: Detached house (Customer facility)

## Claims

1. An electrical energy storage control system, configured to control an electrical energy storage having a storage battery and allowed to be installed in a customer facility, comprising:
a first communicator configured to communicate with a second communicator of the electrical energy storage;
a creation unit configured to create an auxiliary control instruction representing operation instruction content to the electrical energy storage in response to occurrence of communication malfunction between the first communicator and the second communicator; and
an electrical energy storage controller configured to provide the electrical energy storage via the first communicator with a main control instruction representing operation instruction content to the electrical energy storage and the auxiliary control instruction.

2. The electrical energy storage control system of claim 1, wherein the operation instruction content represented by the auxiliary control instruction is an operation mode of the electrical energy storage, containing charge of the storage battery and discharge of the storage battery.

3. An electrical energy storage system, comprising
an electrical energy storage control system of either claim 1 or 2, and
the electrical energy storage, wherein
the electrical energy storage comprises
the storage battery,
the second communicator configured to communicate with the first communicator,
a charge discharge controller configured to perform charge discharge control of the storage battery, and
a determination unit configured to determine whether communication between the first communicator and the second communicator is normal or communication malfunction occurs therebetween,
the second communicator configured to receive, from the electrical energy storage controller during normal communication between the first communicator and the second communicator, the main control instruction and the auxiliary control instruction, and
the charge discharge controller configured to perform charge discharge control of the storage battery based on the main control instruction in response to a determination result by the determination unit representing the normal communication between the first communicator and the second communicator, the charge discharge controller being configured to, in response to a determination result by the determination unit representing the communication malfunction between the first communicator and the second communicator, perform charge discharge control of the storage battery based on the auxiliary control instruction received during the normal communication between the first communicator and the second communicator.

4. An electrical energy storage control device, configured to control an electrical energy storage having a storage battery and allowed to be installed in a customer facility, comprising:
a first communicator configured to communicate with a second communicator of the electrical energy storage; and
an electrical energy storage controller configured to provide the electrical energy storage via the first communicator with
a main control instruction representing operation instruction content to the electrical energy storage and
an auxiliary control instruction representing operation instruction content to the electrical energy storage in response to occurrence of communication malfunction between the first communicator and the second communicator.

5. The electrical energy storage control device of claim 4, further comprising a creation unit configured to create the auxiliary control instruction.

6. A charge discharge control device, configured to perform charge discharge control of a storage battery allowed to be installed in a customer facility, comprising:
a second communicator configured to communicate with a first communicator of an electrical energy storage control device;
a charge discharge controller configured to perform charge discharge control of the storage battery; and
a determination unit configured to determine whether communication between the first communicator and the second communicator is normal or communication malfunction occurs therebetween, wherein
the second communicator is configured to receive, from the electrical energy storage control device during normal communication between the first communicator and the second communicator,
a main control instruction representing operation instruction content of the charge discharge control device, and
an auxiliary control instruction representing operation instruction content of the charge discharge control device during occurrence of communication malfunction between the first communicator and the second communicator, and
the charge discharge controller is configured to perform charge discharge control of the storage battery based on the main control instruction in response to a determination result by the determination unit representing the normal communication between the first communicator and the second communicator, the charge discharge controller being configured to, in response to a determination result by the determination unit representing the communication malfunction between the first communicator and the second communicator, perform charge discharge control of the storage battery based on the auxiliary control instruction received during the normal communication between the first communicator and the second communicator.

7. The charge discharge control device of claim 6, wherein the charge discharge controller is configured to perform charge discharge control of the storage battery based on remaining capacity of the storage battery and the main control instruction or the auxiliary control instruction.

8. A charge discharge control device of either claim 6 or 7, wherein the charge discharge controller is configured to, when a determination result by the determination unit represents a change from a malfunction state to a normal state of the communication between the first communicator and the second communicator, perform charge discharge control of the storage battery based on the main control instruction received by the second communicator.

9. An electrical energy storage, comprising
a charge discharge control device of any one of claims 6 to 8, and
the storage battery allowed to be installed in the customer facility.
